# EUROPÄISCHE PATENTSCHRIFT

(11) **EP 2 424 205 B1**
(45) Veröffentlichungstag und Bekanntmachung des Hinweises auf die Patenterteilung: **13.03.2019**
(21) Anmeldenummer: 10014794.1
(22) Anmeldetag: 19.11.2010
(51) Int. Cl.: H04L 12/58, H04M 7/00, H04M 7/12, H04L 29/06, H04M 3/42

(54) **Verfahren und Anordnung zur automatischen Übertragung einer Zustandsinformation**
Method and system for automatic transfer of status information
Procédé et agencement de transmission automatique d'une information d'état

(30) Priorität: 26.08.2010 EP 10008900
(43) Veröffentlichungstag der Anmeldung: 29.02.2012
(73) Patentinhaber: Unify GmbH & Co. KG, 80807 München (DE)
(72) Erfinder: Rist, Claus, 44795 Bochum (DE)
(74) Vertreter: Fritzsche, Thomas

(56) Entgegenhaltungen:
- EP-A1- 1 549 024
- EP-A2- 1 589 717
- US-A1- 2007 130 260

## Beschreibung

Die vorliegende Erfindung betrifft ein Verfahren und eine Anordnung zur automatischen Übertragung einer Zustandsinformation wenigstens eines ersten, für die Sprachkommunikation eingerichteten Kommunikationsendgerätes an wenigstens ein zweites, für die Textkommunikation eingerichtetes Kommunikationsendgerät. Beispiele für solche für die Sprachkommunikation eingerichteten Kommunikationsendgeräte sind Telefonie-Endgeräte, umgangssprachlich als Telefone bezeichnet, also beispielsweise Festnetztelefone, Mobiltelefone oder andere, für die Sprachkommunikation eingerichtete Kommunikationsendgeräte.

Neben diesen für die Sprachkommunikation eingerichteten Kommunikationsendgeräten sind seit langem andere Kommunikationsendgeräte bekannt, die hauptsächlich oder ausschließlich für die Textkommunikation eingerichtet sind, wie beispielsweise Kommunikationsgeräte für den Empfang und/oder für den Versand von Nachrichten in Textform, wie beispielsweise E-Mails, SMS, oder andere Nachrichten in Textform.

Derartige Kommunikationsendgeräte sind häufig untereinander durch eine sogenannte Kommunikationsinfrastruktur verbunden, zu denen regelmäßig auch sogenannte Kommunikationsserver gehören, welche eine Weiterleitung oder einen Transport von Nachrichten oder anderen Informationen zwischen den beteiligten Endgeräten ermöglichen.

Für die Sprachkommunikation eingerichtete Kommunikationsendgeräte sind dabei regelmäßig durch einen oder mehrere Sprachkommunikationsserver untereinander verbunden, deren technischer Aufbau von der verwendeten Kommunikationstechnologie abhängt. So sind Telefonendgeräte in klassischen Telefonnetzen untereinander über Vermittlungssysteme oder auch über eine Hierarchie von Vermittlungssystemen verbunden, die je nach Komplexität oder Abdeckung private und/oder öffentliche Vermittlungssysteme umfassen können.

Mit der zunehmenden Verbreitung von Datennetzen, wie beispielsweise dem Internet, die zunehmend auch für die Sprachkommunikation genutzt werden, werden neben den klassischen Sprachkommunikationsservern, also herkömmlichen Vermittlungssystemen, auch andere Arten von Sprachkommunikationsservern verwendet, die Sprachnachrichten in digitalisierter Form in ähnlicher Weise transportieren oder weiterleiten, wie andere in Datennetzen auftretende Daten, die nicht durch die Digitalisierung von Sprachnachrichten erzeugt worden sind. Beispiele für solche Sprachkommunikationsserver sind praktisch alle Arten von Netzwerkelementen, die in Datennetzen zum Datentransport üblicherweise verwendet werden, weil es für die Übertragung digitaler Daten im Grunde ohne Belang ist, ob diese Daten nun durch Digitalisierung von Sprachsignalen zustande gekommen sind oder nicht.

Wegen der zunehmenden Vereinheitlichung der Kommunikationsnetze, die mit einer Integration von Sprachkommunikationsnetzen und Textkommunikationsnetzen in allgemeine Datenkommunikationsnetze einhergeht, wird die Unterscheidung zwischen Sprachkommunikation, Textkommunikation und anderen Arten der Kommunikation, wie beispielsweise der Bild- oder Videodatenkommunikation zunehmend weniger eine Frage der Hardwarearchitektur als eine Frage der auf zunehmend einheitlichen Hardwarearchitekturen, die zur Datenkommunikation verwendet werden, ablaufenden Softwareprodukte, welche zur Kommunikation Protokolle verwenden, die der Natur und dem Ursprung der jeweils transportierten Daten und der damit zusammenhängenden Bedürfnisse angemessen sind. So ist beispielsweise bei der Übertragung von Sprachdaten in Datennetzen höhere Anforderung an die Übertragungsgeschwindigkeit der Daten zu stellen als in Textkommunikationsnetzen, bei denen es häufig weniger wichtig ist, ob eine E-Mail oder eine SMS eine Zehntel oder eine halbe Sekunde für ihre Übertragung benötigt.

Die Unterscheidung zwischen Kommunikationsendgeräten für die Sprachkommunikation und für die Textkommunikation wird daher zunehmend eine Frage der Nutzung von bestimmten Diensten oder Protokollen als eine Frage der verwendeten Geräte und Hardwarearchitekturen. So kann ein Personal Computer, ein sogenanntes Smart-Phone oder ein Notebook die Funktionen eines Telefonendgerätes und eines E-Mail-Clients in einem Gerät heute problemlos integrieren. Die zur Realisierung der Netzwerkfunktionen verwendeten Netzwerkelemente nehmen dabei regelmäßig gleichermaßen und gleichzeitig die Funktionen von Sprachkommunikationsservern und Textkommunikationsservern oder eben allgemeiner von Datenkommunikationsservern wahr, wobei die Unterschiede in den verschiedenen Kommunikationsarten weniger eine Frage der Hardware als mehr eine Frage der verwendeten Kommunikationsprotokolle sind.

Bei einigen Formen der Textkommunikation, die häufig auch als Instant Messaging bezeichnet werden, ist es erstrebenswert, dass die Benutzer dieser Kommunikationsformen über die Verfügbarkeit eines Sprachkommunikationskanals zu anderen Benutzern unterrichtet sind, mit denen sie momentan oder gelegentlich in Verbindung treten wollen. So kann sich im Verlauf einer textbasierten Kommunikation der Wunsch ergeben, einen Kommunikationspartner über einen Sprachkommunikationsdienst, insbesondere über ein Telefon anrufen zu können. In solchen Fällen ist es wünschenswert, über die Verfügbarkeit oder Erreichbarkeit des Benutzers über einen solchen Sprachkommunikationsdienst informiert zu sein oder informiert zu werden, insbesondere zu wissen, ob ein Telefonie-Endgerät eines bestimmten Benutzers derzeit besetzt oder frei ist.

Die EP 1 589 717 A2 offenbart ein Präsenz-Information zur Verfügung stellendes System und Verfahren, welches für unterschiedliche Applikationen, die einen Präsenz-Dienst benutzen, jeweils eigene Präsenz-Information zur Verfügung stellt. So wird etwa eine Präsenzinformation zu einem Telefonendgerät an eine Verarbeitungseinrichtung übermittelt und dieser Präsenzinformation durch die Verarbeitungseinrichtung eine andere Präsenzinformation zu einem Texteingabegerät zugeordnet und diese andere Präsenzinformation an eine dem Texteingabegerät zugeordnete Applikation übermittelt und von dieser verwendet. Die US 2007/130260 und EP 1 549 024 A1 offenbaren ähnliche Systeme zur Übertragung von Präsenzinformationen.

Der vorliegenden Erfindung liegt daher die Aufgabe zugrunde, eine technische Lehre anzugeben, die eine funktionelle Integration verschiedener Kommunikationskanäle, insbesondere von Sprachkommunikationskanälen und Textkommunikationskanälen ermöglicht oder wenigstens erleichtert. Diese Aufgabe wird durch ein Verfahren oder eine Anordnung nach einem der unabhängigen Ansprüche gelöst. Die Unteransprüche sollen vorteilhafte Weiterbildungen der Erfindung unter Schutz stellen.

Die vorliegende Erfindung wird durch die unabhängigen Ansprüche 1 und 5 definiert. Die abhängigen Ansprüche geben mögliche Erweiterungen an.

In einer erweiterten Form ist es möglich, dass die Übertragung von Zustandsinformationen zwischen einem Sprachkommunikationsserver und einem Textkommunikationsserver dann erfolgt, wenn der Textkommunikationsserver dem Sprachkommunikationsserver zuvor signalisiert hat, dass die Übertragung erfolgen soll.

Unter einem Kommunikationsendgerät ist im Zusammenhang mit der vorliegenden Erfindung jede Art von Kommunikationseinrichtung zu verstehen, mit deren Hilfe ein Kommunikationsteilnehmer Nachrichten, insbesondere Sprachnachrichten, Textnachrichten oder auch andere Nachrichten, wie beispielsweise auch Bild- oder Videonachrichten mit anderen Kommunikationsteilnehmern austauschen, an diese übertragen oder von diesen beziehen kann. Zur Kommunikation mit anderen Kommunikationsteilnehmern bedient sich der das Kommunikationsendgerät benutzende Kommunikationsteilnehmer dabei der Leistungsmerkmale wenigstens eines Kommunikationsdienstes, beispielsweise eines Telefonie-Dienstes, eines E-Mail-Dienstes, eines Short Message Service oder anderer Kommunikationsdienste.

Unter einem für die Sprachkommunikation eingerichteten Kommunikationsendgerät ist in diesem Zusammenhang jede Art von Kommunikationsendgerät zu verstehen, das seinem Benutzer eine Kommunikation mit Hilfe gesprochener natürlicher Sprache, d. h. durch Eingabe entsprechender akustischer Signale an eine entsprechende elektroakustische Wandlungseinrichtung und anschließende Wandlung dieser akustischen Signale in elektrische Signale, vorzugsweise anschließende Digitalisierung der elektrischen Signale und Übertragung der vorzugsweise digitalisierten elektrischen Signale an einen anderen Kommunikationsteilnehmer ermöglicht. Beispiele für solche Kommunikationsendgeräte sind Telefonie-Endgeräte, insbesondere Festnetztelefone, Mobiltelefone, Internettelefone (Voice over IP) oder andere Telefonie-Endgeräte.

Unter einem für die Textkommunikation eingerichteten Kommunikationsendgerät ist in diesem Zusammenhang jede Art von Kommunikationsendgerät zu verstehen, die seinem Benutzer die Kommunikation mit anderen Kommunikationsteilnehmern durch den Austausch von Textnachrichten ermöglicht. Beispiele für solche für die Textkommunikation eingerichteten Kommunikationsendgeräte sind Personal Computer oder Notebooks, die mit E-Mail-Clients oder anderen für die textbasierte Kommunikation vorgesehenen Anwendungen, wie sogenannten Chat-Clients ausgerüstet sind, immer aber auch Mobiltelefone, über die SMS-Nachrichten versandt oder empfangen werden können und ähnliche Geräte.

In diesem Zusammenhang ist unter einem Sprachkommunikationsserver jede Einrichtung zu verstehen, die zur Vermittlung oder Weiterleitung von Sprachnachrichten, die zwischen zur Sprachkommunikation eingerichteten Kommunikationsendgeräten ausgetauscht oder übertragen werden sollen, eingerichtet oder geeignet ist. Beispiele für solche Sprachkommunikationsserver sind insbesondere öffentliche oder private Nebenstellenanlagen oder Vermittlungsanlagen, aber auch internetfähige und zur Sprachkommunikation eingerichtete Netzwerkkomponenten, wie sogenannte Switches oder Router.

In diesem Zusammenhang ist unter einem Textkommunikationsserver jede Einrichtung zu verstehen, die geeignet oder dazu eingerichtet ist, Textnachrichten zwischen zur Textkommunikation eingerichteten Kommunikationsendgeräten zu übertragen oder weiterzuleiten. Textkommunikationsserver sind also insbesondere sogenannte SMTP-Server, oder andere, auf anderen Protokollen basierende E-Mail-Server oder ähnliche Einrichtungen, die zum Übertragen, Empfangen, Versenden oder Weiterleiten von Textnachrichten eingerichtet sind.

In diesem Zusammenhang ist unter einer Umsetzeinrichtung eine Netzwerkkomponente oder ein Bestandteil einer Netzwerkkomponente zu verstehen, die bei der Übertragung von Nachrichten zwischen einem Sprachkommunikationsserver und einem Textkommunikationsserver, unabhängig von der Richtung der Übertragung der Nachricht, die bei der Übertragung in den jeweiligen Servern verwendeten Protokolle und Standards berücksichtigt und so umsetzt, dass eine Nachrichtenübertragung zwischen Netzwerkkomponenten und Endgeräten der beiden Kommunikationsarten ermöglicht wird. Derartige Umsetzeinrichtungen sind dem Fachmann grundsätzlich bekannt und werden auch als sogenannte Gateways bezeichnet.

In einer erweiterten Form ist es möglich, dass die Übertragung von Zustandsinformationen zwischen einem Sprachkommunikationsserver und einem Textkommunikationsserver in einem Umfang erfolgt, der durch eine vorherige Signalisierung spezifiziert worden ist. Vorzugsweise erfolgt eine Übertragung von Zustandsinformation also im Anschluss und/oder nach Maßgabe einer vorherigen Signalisierung, wobei im Falle einer Zustandsänderung eines für die Sprachkommunikation eingerichteten Kommunikationsendgerätes der Sprachkommunikationsserver, über welchen dieses Kommunikationsendgerät mit anderen Endgeräten kommuniziert, einen Textkommunikationsserver, welcher über eine Umsetzeinrichtung zum Austausch von Zustandsinformationen mit dem Sprachkommunikationsserver in der Lage ist, die Zustandsänderung signalisiert.

Vorzugsweise werden daraufhin nur diejenigen Zustandsinformationen übertragen, welche geeignet und/oder erforderlich sind, um dem Textkommunikationsserver die Zustandsänderung des für die Sprachkommunikation eingerichteten Kommunikationsendgerätes anzuzeigen, sodass der Textkommunikationsserver in der Lage ist, einem daran angeschlossenen für die Textkommunikation eingerichteten Kommunikationsendgerät die Zustandsänderung mitzuteilen.

Gemäß der hier offenbarten Erfindung ist es vorgesehen, dass wenigstens eine übertragene Zustandsinformation wenigstens eine Präsenz-Information beinhaltet. In diesem Zusammenhang ist unter einer Präsenz-Information eine Information zu verstehen, welche Auskunft gibt über die Möglichkeit und/oder Bereitschaft, eines potenziellen Kommunikationspartners, in eine Kommunikation, insbesondere in eine Sprachkommunikation einzutreten und daran teilzunehmen. Der Client eines Kommunikationsteilnehmers, also vorzugsweise eine auf einem Kommunikationsendgerät des Kommunikationsteilnehmers ablaufende Software, überträgt den Präsenzstatus dabei vorzugsweise auf einen Präsenzserver, der den Präsenzstatus, also die Präsenz-Information vorzugsweise verwaltet und gegebenenfalls weiter verbreitet. Der Client eines Kommunikationsteilnehmers steuert dabei, ob der Präsenzstatus und gegebenenfalls in welcher Weise dieser veröffentlicht werden soll, um anderen Kommunikationsteilnehmern den aktuellen Kommunikationsstatus dieses Benutzers mitzuteilen. Durch eine solche Statusveröffentlichung werden andere Kommunikationsteilnehmer, die mit dem betrachteten Kommunikationsteilnehmer kommunizieren oder kommunizieren wollen über dessen Verfügbarkeit und Bereitschaft zu kommunizieren informiert. Beispiele für mögliche Werte eines Präsenzstatus in einem textbasierten Kommunikationssystem sind Informationen wie "für einen Chat verfügbar", "anwesend", "abwesend", "beschäftigt", "bitte nicht stören".

In einer erweiterten Form ist es möglich, dass wenigstens ein Textkommunikationsserver Nachrichten ohne Aufforderung überträgt. Bei diesem sogenannten Push-Mode werden Nachrichten nicht von einem Client, über eine Anfrage an den Server abgefragt, sondern der Client ist ständig empfangsbereit und der Server überträgt Nachrichten situationsgesteuert, vorzugsweise ohne Verzögerung nach deren Eintreffen.

In einer erweiterten Form ist es möglich, dass die Anordnung derart eingerichtet ist, dass die Übertragung von Zustandsinformationen zwischen einem Sprachkommunikationsserver und einem Textkommunikationsserver dann erfolgt, wenn der Textkommunikationsserver dem Sprachkommunikationsserver zuvor signalisiert hat, dass die Übertragung erfolgen soll.

In einer erweiterten Form ist es außerdem möglich, dass die Anordnung derart eingerichtet ist, dass die Übertragung von Zustandsinformationen zwischen einem Sprachkommunikationsserver und einem Textkommunikationsserver in einem Umfang erfolgt, der durch eine vorherige Signalisierung spezifiziert worden ist. Bei der vorliegenden Erfindung beinhaltet die übertragene Zustandsinformation wenigstens eine Präsenz-Information.

In einer erweiterten Form ist es möglich, dass wenigstens ein Textkommunikationsserver Nachrichten ohne Aufforderung überträgt.

Im Folgenden wird die Erfindung anhand bevorzugter Ausführungsbeispiele mit Hilfe von Figuren näher beschrieben.
Figur 1 In schematischer Weise ein bevorzugtes Ausführungsbeispiel einer erfindungsgemäßen Anordnung und eines erfindungsgemäßen Informationsaustausches gemäß einem bevorzugten Ausführungsbeispiel des erfindungsgemäßen Verfahrens;
Figur 2 Ein Sequenzdiagramm zur schematischen Darstellung des Informationsaustausches gemäß einem ersten Ausführungsbeispiel der vorliegenden Erfindung;
Figur 3 Ein Sequenzdiagramm zur schematischen Darstellung des Informationsaustausches gemäß einem zweiten Ausführungsbeispiel der vorliegenden Erfindung;
Figur 4 Ein Sequenzdiagramm zur schematischen Darstellung des Informationsaustausches gemäß einem dritten Ausführungsbeispiel der vorliegenden Erfindung.

Wichtige Beispiele für sogenannte Instant Messaging Systeme, also für textbasierte Kommunikationssysteme im Sinne der vorliegenden Erfindung sind auf dem sogenannten XMPP-Protokoll basierende Client/Server-Architekturen, die typischerweise asynchron zu Telefonie-Kommunikationsanwendungen laufen. Die vorliegende Erfindung ermöglicht beispielsweise die automatische Übertragung eines sogenannten "on phone" ("telefoniert") Zustandes von einem Telefon zu einem XMPP-Client.

Dazu abonniert der XMPP-Client vorzugsweise über einen XMPP-Server einen sogenannten CTI-Dienst (CTI = Computer Telephony Integration) bei einem Sprachkommunikationsserver, beispielsweise bei einer privaten oder öffentlichen Vermittlungsstelle (PBX), wobei diese Funktionalität vorzugsweise über ein Call Control Gateway (CCGW), also eine spezielle Ausprägung einer Umsetzungseinrichtung zur Verfügung gestellt wird. Das CCGW ist dabei eine Verbindung zwischen der CTI einer PBX und dem XMPP-Server (Textkommunikationsserver). Die CTI-Dienste ermöglichen dem XMPP-Client den Zustand des zugeordneten Telefons zu beobachten oder zu verändern und beispielsweise mittels der sogenannten XMPP Presence Stanza an andere XMPP-Clients zu übermitteln.

Durch die erfindungsgemäße automatische Übertragung des Telefonzustandes wird die Präsenz-Information des Benutzers immer auf dem aktuellen Stand gehalten. XMPP-Client und Telefon werden automatisch synchronisiert. Eine manuelle Informationsübertragung ist daher entbehrlich. Durch die erfindungsgemäße vereinfachte Präsenzverwaltung sind Zeitersparnisse und damit verbundene Kostenersparnisse möglich.

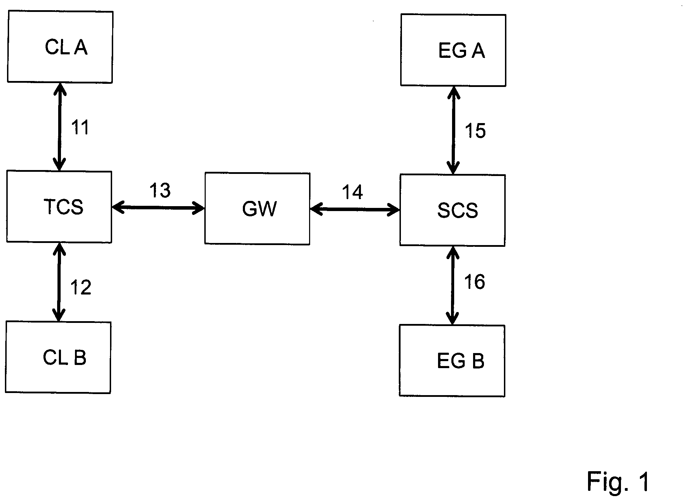

Ein bevorzugtes Ausführungsbeispiel einer erfindungsgemäßen Anordnung stellt Fig. 1 dar. Ein Sprachkommunikationsserver SCS steht in diesem Beispiel mit zwei für die Sprachkommunikation eingerichteten Endgeräten EGA und EGB in Verbindung, und tauscht mit diesen beiden Kommunikationsendgeräten Sprachnachrichten und Zustandsinformationen 15, 16 aus. Ändert sich beispielsweise der Zustand des Kommunikationsendgerätes EGA, dann überträgt dieses Kommunikationsendgerät EGA eine entsprechende Zustandsinformation an den Sprachkommunikationsserver SCS, woraufhin dieser die Zustandsinformation oder eine entsprechende Zustandsänderungsinformation 14 an die Umsetzungseinrichtung GW überträgt.

Die Umsetzungseinrichtung GW überträgt daraufhin eine entsprechende Zustandsinformation oder Zustandsänderungsinformation 13 an den Textkommunikationsserver TCS mit dem die beiden Textkommunikations-Clients CLA und CLB kommunizieren 11, 12. In diesem Beispiel wird der Textkommunikations-Client CLA von dem Kommunikationsteilnehmer genutzt, der auch das Sprachkommunikationsendgerät EGA benutzt. Entsprechend wird der Textkommunikations-Client CLB von dem Kommunikationsteilnehmer genutzt, der auch das Sprachkommunikationsendgerät EGB benutzt.

Auf diese Weise wird es möglich, dass der Kommunikationsteilnehmer, welcher den Textkommunikations-Client CLB verwendet, von einer Zustandsänderung des Sprachkommunikationsendgerätes EGA informiert wird, ohne dass der Benutzer A hierzu manuell eine Nachrichtenübertragung an den Benutzer B einleiten muss.

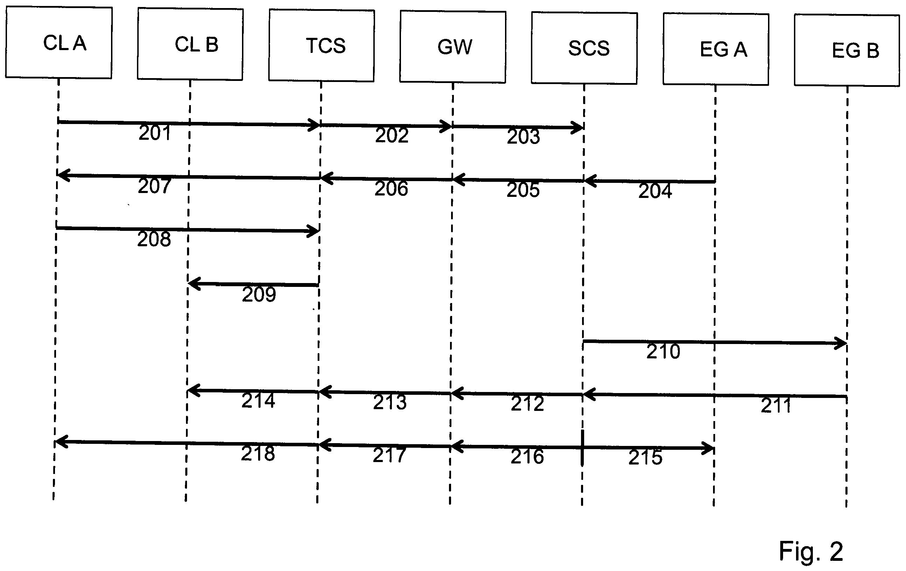

Ein erstes Beispiel für eine erfindungsgemäße Informationsübertragung gemäß einem bevorzugten Ausführungsbeispiel zeigt Fig. 2. In diesem Beispiel initiiert der Kommunikationsteilnehmer A über seinen XMPP-Client CLA einen CTI-unterstützten Anruf zum Kommunikationsteilnehmer B. Mit dem Start dieser Aktion setzt der Teilnehmer A seinen Präsenzstatus auf "telefoniert". Hierzu überträgt der XMPP-Client CLA eine Zustandsinformation 201, beispielsweise ein sogenanntes CSTA-Stanza "make call" an den XMPP-Server TCS. Daraufhin überträgt der XMPP-Server TCS eine entsprechende Zustandsinformation 202, beispielsweise das entsprechende CSTA-Stanza "make call" an die Umsetzungseinrichtung GW, in diesem Beispiel das CCGW, ein Call Control Gateway oder Protokollumsetzer.

Die Zustandsinformation wird hierbei vorzugsweise als sogenanntes CSTA-Stanza übertragen, d. h. vorzugsweise als eine in das XMPP-Protokoll eingebettete, dem CSTA-Protokoll entsprechende Zustandsinformation. Das Akronym CSTA steht hierbei für Computer Supported Telephony Application. Daraufhin überträgt die Umsetzungseinrichtung GW eine entsprechende Information 203, beispielsweise die CSTA-Nachricht "make call" an den Sprachkommunikationsserver SCS. Dieser Sprachkommunikationsserver ist nun darüber informiert, dass Teilnehmer A einen Anruf an Teilnehmer B einleiten möchte. Das Sprachkommunikationsendgerät des Teilnehmers A EGA sendet daraufhin eine Nachricht 204, "set up/invite" an den Sprachkommunikationsserver SCS. Dieser leitet eine entsprechende Nachricht, "service initiated" an die Umsetzungseinrichtung GW weiter 205. Daraufhin sendet die Umsetzeinrichtung eine entsprechende Information 206 an den XMPP-Server TCS und dieser leitet eine entsprechende Information 207, beispielsweise ein CSTA-Stanza "service initiated" an den XMPP-Client CLA des Teilnehmers A weiter.

Der XMPP-Client CLA sendet daraufhin eine Information 208, beispielsweise ein Presence Stanza "on phone" an den Textkommunikationsserver TCS, woraufhin dieser eine entsprechende Information 209, nämlich das Presence Stanza "on phone" an den Textkommunikations-Client CLB sendet. Außerdem sendet der Sprachkommunikationsserver SCS eine Information 210 ("set up/invite") an das Sprachkommunikationsendgerät EGB des Teilnehmers B.

Die Signale "set up" bzw. "invite" entsprechen dabei den üblichen ISDN bzw. SIP-Signalen "set up" bzw. "invite". Das Sprachkommunikationsendgerät EGB des Teilnehmers B sendet nun eine Nachricht 211, "alert/180 ringing", an den Sprachkommunikationsserver SCS, woraufhin dieser eine Nachricht 212, beispielsweise die CSTA-Nachricht "delivered" an die Umsetzungseinrichtung GW sendet, welche eine entsprechende Nachricht 213, beispielsweise das CSTA-Stanza "delivered" an den XMPP-Server TCS weiterleitet. Dieser sendet schließlich eine Nachricht 214, beispielsweise das CSTA-Stanza "delivered" an den XMPP-Client CLB des Teilnehmers B.

Nun sendet der Sprachkommunikationsserver SCS eine Nachricht 215, "alert/180 ringing", an das Sprachkommunikationsendgerät EGA und eine Nachricht 216, CSTA "delivered" an die Umsetzungseinrichtung GW. Daraufhin sendet die Umsetzungseinrichtung GW eine Nachricht 217, beispielsweise das CSTA-Stanza "delivered" an den XMPP-Server TCS, welcher schließlich eine entsprechende Nachricht 218 an den XMPP-Client CLA des Benutzers A weiterleitet. Die Nachrichten "alert" bzw. "ringing" haben dabei wieder die üblichen Bedeutungen gemäß ISDN bzw. SIP-Standard.

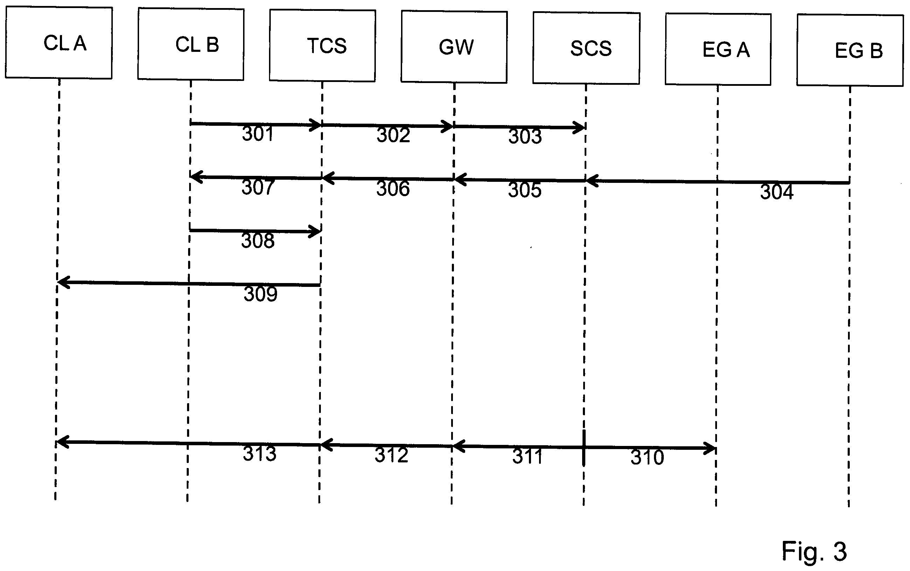

Ein zweites Beispiel für eine erfindungsgemäße Informationsübertragung gemäß einem bevorzugten Ausführungsbeispiel zeigt Fig. 3. In diesem Beispiel beantwortet der Kommunikationsteilnehmer B unterstützt durch seinen XMPP-Client CLB den CTI-unterstützten Anruf des Kommunikationsteilnehmers A. Dabei wird der Präsenzstatus des Teilnehmers B ebenfalls auf "telefoniert" gesetzt. Hierzu überträgt der XMPP-Client CLB eine Zustandsinformation 301, beispielsweise ein sogenanntes CSTA-Stanza "answer call" an den XMPP-Server TCS. Daraufhin überträgt der XMPP-Server TCS eine entsprechende Zustandsinformation 302, beispielsweise das entsprechende CSTA-Stanza "answer call" an die Umsetzungseinrichtung GW, in diesem Beispiel das CCGW, ein Call Control Gateway oder einen Protokollumsetzer.

Die Zustandsinformation wird hierbei vorzugsweise als sogenanntes CSTA-Stanza übertragen, d. h. vorzugsweise als eine in das XMPP-Protokoll eingebettete, dem CSTA-Protokoll entsprechende Zustandsinformation. Das Akronym CSTA steht hierbei für Computer Supported Telephony Application. Daraufhin überträgt die Umsetzungseinrichtung GW eine entsprechende Information 303, beispielsweise die CSTA-Nachricht "answer call" an den Sprachkommunikationsserver SCS. Dieser Sprachkommunikationsserver ist nun darüber informiert, dass Teilnehmer B den Anruf des Teilnehmers A beantworten möchte. Das Sprachkommunikationsendgerät des Teilnehmers B EGB sendet daraufhin eine Nachricht 304, "connect / 200 OK" an den Sprachkommunikationsserver SCS. Dieser leitet eine entsprechende CSTA-Nachricht, "established" an die Umsetzungseinrichtung GW weiter 305. Daraufhin sendet die Umsetzeinrichtung eine entsprechende Information 306 an den XMPP-Server TCS und dieser leitet eine entsprechende Information 307, beispielsweise ein CSTA-Stanza "established" an den XMPP-Client CLB des Teilnehmers B weiter.

Der XMPP-Client CLB sendet daraufhin eine Information 308, beispielsweise ein Presence Stanza "on phone" an den Textkommunikationsserver TCS, woraufhin dieser eine entsprechende Information 309, nämlich das Presence Stanza "on phone" an den Textkommunikations-Client CLA sendet. Außerdem sendet der Sprachkommunikationsserver SCS eine Information 310 ("connect / 200 OK") an das Sprachkommunikationsendgerät EGA des Teilnehmers A und eine CSTA-Nachricht 311 ("established") an die Umsetzeinrichtung GW, welche daraufhin diese CSTA-Nachricht 311 als CSTA-Stanza 312 im Rahmen des XMPP über den XMPP-Server TCS an den Client CLA des Teilnehmers A weiterleitet 313.

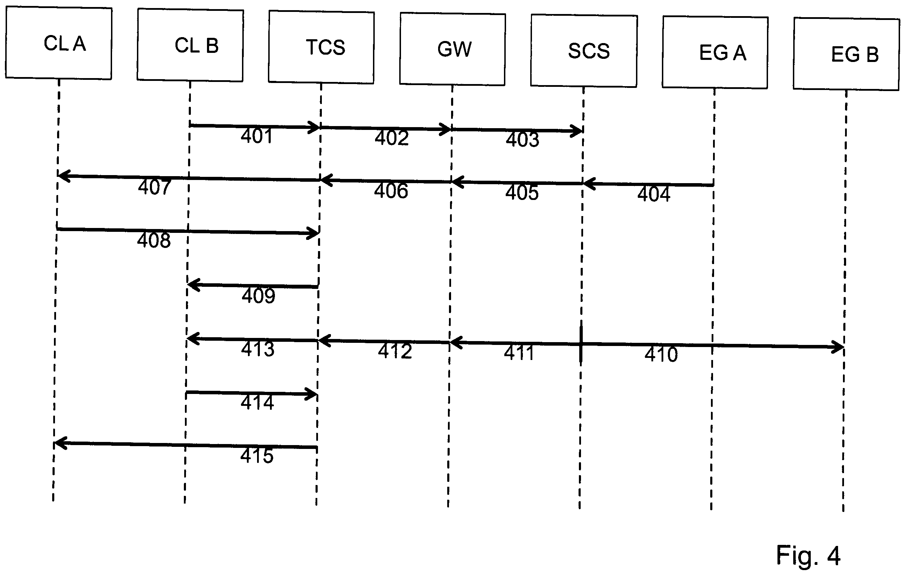

Ein drittes Beispiel für eine erfindungsgemäße Informationsübertragung gemäß einem bevorzugten Ausführungsbeispiel zeigt Fig. 4. In diesem Beispiel wird das mittels XMPP-Clients CTI-unterstützt aufgebaute Gespräch ausgelöst und der Präsenz-Status wieder automatisch auf verfügbar gesetzt. Zu Beginn dieser Aktion sendet der XMPP-Client CLB des Teilnehmers B ein Signal "clear connection" an den Sprachkommunikationsserver SCS. Dazu überträgt der XMPP-Client CLB eine Zustandsinformation 401, beispielsweise ein sogenanntes CSTA-Stanza "clear connection" an den XMPP-Server TCS. Daraufhin überträgt der XMPP-Server TCS eine entsprechende Zustandsinformation 402, beispielsweise das entsprechende CSTA-Stanza "clear connection" an die Umsetzungseinrichtung GW, in diesem Beispiel das CCGW, ein Call Control Gateway oder einen Protokollumsetzer.

Die Zustandsinformation wird hierbei vorzugsweise als sogenanntes CSTA-Stanza übertragen, d. h. vorzugsweise als eine in das XMPP-Protokoll eingebettete, dem CSTA-Protokoll entsprechende Zustandsinformation. Daraufhin überträgt die Umsetzungseinrichtung GW eine entsprechende Information 403, beispielsweise die CSTA-Nachricht "clear connection" an den Sprachkommunikationsserver SCS. Dieser Sprachkommunikationsserver ist nun darüber informiert, dass Teilnehmer B das gespräch mit Teilnehmer A auslösen möchte. Das Sprachkommunikationsendgerät des Teilnehmers A EGA sendet daraufhin eine Nachricht 404, "disconnect/bye" an den Sprachkommunikationsserver SCS. Dieser leitet eine entsprechende Nachricht, "connection cleared" an die Umsetzungseinrichtung GW weiter 405. Daraufhin sendet die Umsetzeinrichtung eine entsprechende Information 406 an den XMPP-Server TCS und dieser leitet eine entsprechende Information 407, beispielsweise ein CSTA-Stanza "connection cleared" an den XMPP-Client CLA des Teilnehmers A weiter.

Der XMPP-Client CLA sendet daraufhin eine Information 408, beispielsweise ein entsprechendes Presence Stanza an den Textkommunikationsserver TCS, woraufhin dieser eine entsprechende Information 409, nämlich dieses Presence Stanza an den Textkommunikations-Client CLB sendet. Außerdem sendet der Sprachkommunikationsserver SCS eine Information 410 ("disconnect/bye") an das Sprachkommunikationsendgerät EGB des Teilnehmers B.

Die Signale "disconnect" bzw. "bye" entsprechen dabei den üblichen ISDN bzw. SIP-Signalen "disconnect" bzw. "bye". Der Sprachkommunikationsserver SCS sendet außerdem eine Nachricht 411, "connection cleared", an die Umsetzeinrichtung GW, woraufhin diese Umsetzeinrichtung GW eine Nachricht 412, beispielsweise das CSTA-Stanza "connection cleared" an den Sprachkommunikationsserver SCS sendet, welcher daraufhin eine entsprechende Nachricht 413, beispielsweise das CSTA-Stanza "connection cleared" an den XMPP-Client CLB des Teilnehmers B weiterleitet. Dieser sendet schließlich eine Nachricht 414, beispielsweise ein Presence-Stanza an den XMPP-Server TCS. Schließlich sendet der XMPP-Server TCS eine entsprechende Nachricht 415 an den XMPP-Client CLA des Benutzers A.

## Patentansprüche

1. Verfahren zur automatischen Übertragung einer Zustandsinformation wenigstens eines ersten, für die Sprachkommunikation eingerichteten Kommunikationsendgerätes (EG A, EG B) an wenigstens ein zweites, für die Textkommunikation eingerichtetes Kommunikationsendgerät (CL A, CL B), bei dem die Sprachkommunikation zwischen Kommunikationsendgeräten über wenigstens einen Sprachkommunikationsserver (SCS) und die Textkommunikation zwischen Kommunikationsendgeräten über wenigstens einen Textkommunikationsserver (TCS) vermittelt wird, wobei der wenigstens eine Sprachkommunikationsserver (SCS) und der wenigstens eine Textkommunikationsserver (TCS) Nachrichten über wenigstens eine Umsetzungseinrichtung (GW) austauschen, wobei die Zustandsinformation von dem wenigstens einen ersten Kommunikationsendgerät (EG A, EG B) über den wenigstens einen Sprachkommunikationsserver (SCS), die wenigstens eine Umsetzungseinrichtung (GW) und den wenigstens einen Textkommunikationsserver (TCS) an das wenigstens eine zweite Kommunikationsendgerät (CL A, CL B) übertragen wird, und wobei die wenigstens eine übertragene Zustandsinformation wenigstens eine Präsenzinformation beinhaltet,
**dadurch gekennzeichnet, dass**
die Zustandsinformation weiterhin umfasst
- Information über ein Einleiten eines Anrufs von dem ersten Kommunikationsendgerät (EG A, EG B) zu dem zweiten Kommunikationsendgerät (EG A, EG B),
- Information über ein Beantworten des Anrufs durch das zweite Kommunikationsendgerät (EG A, EG B) an das erste Kommunikationsendgerät (EG A, EG B),
- Information über ein Auslösen, d.h. Beenden, des Anrufs zwischen dem ersten Kommunikationsendgerät (EG A, EG B) und dem zweiten Kommunikationsendgerät (EG A, EG B).

2. Verfahren nach Anspruch 1, wobei die Übertragung von Zustandsinformationen zwischen einem Sprachkommunikationsserver (SCS) und einem Textkommunikationsserver (TCS) dann erfolgt, wenn der Textkommunikationsserver (TCS) dem Sprachkommunikationsserver (SCS) zuvor signalisiert hat, dass die Übertragung erfolgen soll.

3. Verfahren nach Anspruch 2, wobei die Übertragung von Zustandsinformationen zwischen einem Sprachkommunikationsserver (SCS) und einem Textkommunikationsserver (TCS) in einem Umfang erfolgt, der durch eine vorherige Signalisierung spezifiziert worden ist.

4. Verfahren nach einem der vorhergehenden Ansprüche, wobei wenigstens ein Textkommunikationsserver (TCS) Nachrichten ohne Aufforderung überträgt.

5. Anordnung zur automatischen Übertragung einer Zustandsinformation wenigstens eines ersten, für die Sprachkommunikation eingerichteten Kommunikationsendgerätes (EG A, EG B) an wenigstens ein zweites, für die Textkommunikation eingerichtetes Kommunikationsendgerät (CL A, CL B), mit wenigstens einem einen Sprachkommunikationsserver (SCS) zur Vermittlung der Sprachkommunikation zwischen Kommunikationsendgeräten und wenigstens einem Textkommunikationsserver (TCS) zur Vermittlung der Textkommunikation zwischen Kommunikationsendgeräten, wobei wenigstens eine Umsetzungseinrichtung (GW) vorgesehen ist, über die der wenigstens eine Sprachkommunikationsserver (SCS) und der wenigstens eine Textkommunikationsserver (TCS) Nachrichten austauschen, und wobei die Zustandsinformation von dem wenigstens einen ersten Kommunikationsendgerät (EG A, EG B) über den wenigstens einen Sprachkommunikationsserver (SCS), die wenigstens eine Umsetzungseinrichtung (GW) und den wenigstens einen Textkommunikationsserver (TCS) an das wenigstens eine zweite Kommunikationsendgerät (CL A, CL B) übertragen wird, und wobei die wenigstens eine übertragene Zustandsinformation wenigstens eine Präsenzinformation beinhaltet, **dadurch gekennzeichnet, dass** die Zustandsinformation weiterhin umfasst
- Information über ein Einleiten eines Anrufs von dem ersten Kommunikationsendgerät (EG A, EG B) zu dem zweiten Kommunikationsendgerät (EG A, EG B),
- Information über ein Beantworten des Anrufs durch das zweite Kommunikationsendgerät (EG A, EG B) an das erste Kommunikationsendgerät (EG A, EG B),
- Information über ein Auslösen, d.h. Beenden, des Anrufs zwischen dem ersten Kommunikationsendgerät (EG A, EG B) und dem zweiten Kommunikationsendgerät (EG A, EG B).

6. Anordnung nach Anspruch 5, wobei die Anordnung derart eingerichtet ist, dass die Übertragung von Zustandsinformationen zwischen einem Sprachkommunikationsserver (SCS) und einem Textkommunikationsserver (TCS) dann erfolgt, wenn der Textkommunikationsserver (TCS) dem Sprachkommunikationsserver (SCS) zuvor signalisiert hat, dass die Übertragung erfolgen soll.

7. Anordnung nach Anspruch 6, wobei die Anordnung derart eingerichtet ist, dass die Übertragung von Zustandsinformationen zwischen einem Sprachkommunikationsserver (SCS) und einem Textkommunikationsserver (TCS) in einem Umfang erfolgt, der durch eine vorherige Signalisierung spezifiziert worden ist.

8. Anordnung nach einem der vorhergehenden Ansprüche, wobei wenigstens ein Textkommunikationsserver (TCS) Nachrichten ohne Aufforderung überträgt.

## Claims

1. A method for automatic transfer of status information of at least one first communication end device configured for verbal communication (EG A, EG B) to at least one second communication end device configured for communication in text form (CL A, CL B), whereby verbal communication between communication end devices is transmitted by at least one speech communication server (SCS) and communication in text form between communication devices by at least one text communication server (TCS), whereby the at least one speech communication server (SCS) and the at least one text communication server (TCS) exchange messages via at least one conversion device (GW), whereby the status information is transmitted by the at least one first communication end device (EG A, EG B) via the at least one speech communication server (SCS), the at least one conversion device (GW) and the at least one text communication server (TCS) to the at least one second communication end device (CL A, CL B), and whereby at least one transmitted status information contains at least one presence information,
**characterized in that**
the presence information also contains
- information on the initiation of a call by the first communication end device (EG A, EG B) to the second communication end device (EG A, EG B);
- information on a response to the call by the second communication end device (EG A, EG B) to the first communication end device (EG A, EG B);
- information on a triggering, i.e. termination, of the call between the first communication end device (EG A, EG B) and the second communication end device (EG A, EG B) .

2. The method of claim 1, whereby
the transmission of status information between a speech communication server (SCS) and a text communication server (TCS) takes place when the text communication server (TCS) has previously signaled the speech communication server (SCS) that the transmission is to take place.

3. The method of claim 2, whereby
the transmission of status information between a speech communication server (SCS) and a text communication server (TCS) takes place in an extent specified by previous signaling.

4. The method of anyone of the said claims, whereby at least one text communication server (TCS) transmits messages without request.

5. A system for automatic transfer of status information by at least one first communication end device configured for verbal communication (EG A, EG B) to at least one second communication end device configured for communication in text form (CL A, CL B), with at least one speech communication server (SCS) for transmitting the speech communication between communication end devices and at least one text communication server (TCS) for transmitting text communication between communication end devices, whereby at least one conversion device (GW) is envisaged, via which the at least one speech communication server (SCS) and the at least one text communication server (TCS) exchange messages, and whereby the at least one transmitted status information of the at least one first communication end device (EG A, EG B) is transmitted via the at least one speech communication server (SCS), the at least one conversion device (GW) and the at least one text communication server (TCS) to the at least one second communication end device (CL A, CL B), and whereby the at least one transmitted status information contains at least one presence information, **characterized in that** the presence information further contains
- information on the initiation of a call by the first communication end device (EG A, EG B) to the second communication end device (EG A, EG B);
- information on a response to the call by the second communication end device (EG A, EG B) to the first communication end device (EG A, AG B);
- information on a triggering, i.e. termination, of the call between the first communication end device (EG A, EG B) and the second communication end device (EG A, EG B) .

6. The system of claim 5, whereby
the system is configured so that the transmission of status information between a speech communication server (SCS) and a text communication server (TCS) takes place when the text communication server (TCS) has previously signaled the speech communication server (SCS) that the transmission is to take place.

7. The system of claim 6, whereby
the system is configured so that the transmission of status information between a speech communication server (SCS) and a text communication server (TCS) takes place in an extent specified by previous signaling.

8. The system of anyone of the said claims, whereby at least one text communication server (TCS) transmits messages without request.

## Revendications

1. Procédé de transmission automatique d'une information d'état d'au moins un premier appareil terminal de communication (EG A, EG B) conçu pour la communication vocale à au moins un second appareil terminal de communication (CL A, CL B) conçu pour la communication textuelle, selon lequel la communication vocale entre des appareils terminaux de communication est transférée par l'intermédiaire d'au moins un serveur de communication vocale (SCS) et la communication textuelle entre des appareils terminaux de communication est transférée par l'intermédiaire d'au moins un serveur de communication textuelle (TCS), dans lequel l'au moins un serveur de communication vocale (SCS) et l'au moins un serveur de communication textuelle (TCS) échangent des messages par l'intermédiaire d'au moins un dispositif de transposition (GW), dans lequel l'information d'état est transmise de l'au moins un premier appareil terminal de communication (EG A, EG B) par l'intermédiaire de l'au moins un serveur de communication vocale (SCS), de l'au moins un dispositif de transposition (GW) et de l'au moins un serveur de communication textuelle (TCS) à l'au moins un second appareil terminal de communication (CL A, CL B), et dans lequel l'au moins une information d'état transmise contient une information de présence,
**caractérisé en ce que**
l'information d'état comporte en outre
- une information sur un établissement d'un appel du premier appareil terminal de communication (EG A, EG B) au second appareil terminal de communication (EG A, EG B),
- une information sur une réponse à l'appel par le second appareil terminal de communication (EG A, EG B) à l'intention du premier appareil terminal de communication (EG A, EG B),
- une information sur un déclenchement, c'est-à-dire, une fin de l'appel entre le premier appareil terminal de communication (EG A, EG B) et le second appareil terminal de communication (EG A, EG B).

2. Procédé selon la revendication 1, dans lequel la transmission d'informations d'état entre un serveur de communication vocale (SCS) et un serveur de communication textuelle (TCS) a lieu ensuite lorsque le serveur de communication textuelle (TCS) a signalisé auparavant au serveur de communication vocale (SCS) que la transmission doit avoir lieu.

3. Procédé selon la revendication 2, dans lequel
la transmission d'informations d'état entre un serveur de communication vocale (SCS) et un serveur de communication textuelle (TCS) a lieu dans un volume qui a été spécifié par une signalisation préalable.

4. Procédé selon l'une quelconque des revendications précédentes, dans lequel au moins un serveur de communication textuelle (TCS) transmet sans sollicitation des messages.

5. Agencement pour la transmission automatique d'une information d'état d'au moins un premier appareil terminal de communication (EG A, EG B) conçu pour la communication vocale à au moins un second appareil terminal de communication (CL A, CL B) conçu pour la communication textuelle, avec au moins un serveur de communication vocale (SCS) pour le transfert de la communication vocale entre des appareils terminaux de communication et au moins un serveur de communication textuelle (TCS) pour le transfert de la communication textuelle entre des appareils terminaux de communication, dans lequel il est prévu au moins un dispositif de transposition (GU) par l'intermédiaire duquel l'au moins un serveur de communication vocale (SCS) et l'au moins un serveur de communication textuelle (TCS) échangent des messages, et dans lequel l'information d'état est transmise de l'au moins un premier appareil terminal de communication (EG A, EG B) par l'intermédiaire de l'au moins un serveur de communication vocale (SCS), de l'au moins un dispositif de transposition (GW) et de l'au moins un serveur de communication textuelle (TCS) à l'au moins un second appareil terminal de communication (CL A, CL B), et dans lequel l'au moins une information d'état transmise contient au moins une information de présence, **caractérisé en ce que** l'information d'état comporte en outre
- une information sur un établissement d'un appel du premier appareil terminal de communication (EG A, EG B) au second appareil terminal de communication (EG A, EG B),
- une information sur une réponse à l'appel par le second appareil terminal de communication (EG A, EG B) au premier appareil terminal de communication (EG A, EG B),
- une information sur un déclenchement, c'est-à-dire une fin de l'appel entre le premier appareil terminal de communication (EG A, EG B) et le second appareil terminal de communication (EG A, EG B),

6. Agencement selon la revendication 5, dans lequel l'agencement est conçu de sorte que la transmission d'informations d'état entre un serveur de communication vocale (SCS) et un serveur de communication textuelle (PCS) a lieu ensuite lorsque le serveur de communication textuelle (TCS) a signalisé auparavant au serveur de communication vocale (SCS) que la transmission doit avoir lieu.

7. Agencement selon la revendication 6, dans lequel l'agencement est conçu de manière que la transmission d'informations d'état entre un serveur de communication vocale (SCS) et un serveur de communication textuelle (TCS) a lieu dans un volume qui a été spécifié par une signalisation préalable.

8. Agencement selon l'une quelconque des revendications précédentes, dans lequel au moins un serveur de communication textuelle (TCS) transmet sans sollicitation des messages.
